# EUROPÄISCHE PATENTANMELDUNG

(11) **EP 1 201 948 A2**
(43) Veröffentlichungstag der Anmeldung: **02.05.2002**
(21) Anmeldenummer: 01124193.2
(22) Anmeldetag: 11.10.2001
(51) Int. Cl.: F16C 29/00

(54) **Verfahren und Vorrichtung zur Herstellung einer Führungsschiene**

(30) Priorität: 27.10.2000 DE 10053271
(71) Anmelder: INA Wälzlager Schaeffler oHG, 91074 Herzogenaurach (DE)
(72) Erfinder: Baalmann, Klaus, Dr., 66424 Homburg (DE)

(57) **Zusammenfassung**

Bei einem Verfahren und einer Vorrichtung zur Herstellung einer geraden Führungsschiene (4) für eine Linearführung, nach welchem lokale Erhebungen (5, 6) an der Schienenoberfläche durch Abtragen von Schienenwerkstoff entfernt und dadurch Ungeradheiten der Führungsschiene (4) ausgemerzt werden, wird erfindungsgemäß die Führungsschiene (4) in den Bereichen ihrer Erhebungen (5, 6) einer elektrochemischen Materialabtragung unterworfen.

## Beschreibung

### Gebiet der Erfindung

Die Erfindung betrifft ein Verfahren zu Herstellung einer geraden Führungsschiene für eine Linearführung, nach welchem lokale Erhebungen an der Schienenoberfläche durch Abtragen von Schienenwerkstoff entfernt und dadurch Ungeradheiten der Führungsschiene ausgemerzt werden, sowie eine Vorrichtung zur Durchführung dieses Verfahrens.

### Hintergrund der Erfindung

Schienen für Linearführungen haben häufig eine sehr große Länge im Vergleich zu ihren Querschnittsabmessungen. Für eine gute Verwendbarkeit der Schiene ist eine gute Geradheit erwünscht. Um einen Tragkörper einer Linearführung längs einer Führungsschiene einwandfrei bewegen zu können, ist ein präzises Querschnittsprofil der Schiene notwendig. Insbesondere die Laufbahnen der Schiene, an denen der Tragkörper abgestützt ist, dürfen absolut und über der Länge der Schiene nur wenige µm von ihrer idealen Position abweichen. Für die Fertigung der Schiene ist es also notwendig, lange schlanke Teile mit präzisen Positionen der Laufbahnen herstellen zu können.

Häufig wird eine solche Führungsschiene in einem letzten Fertigungsschritt geschliffen. Zur Übertragung der beim Schleifen auftretenden Kräfte ist es erforderlich, dass die Schiene fest ein- oder aufgespannt wird. Eventuell schon vorhandene Ungeradheiten der Führungsschiene werden bei diesem Spannen korrigiert. Die Schiene wird "gefesselt" geschliffen. Wird nun die Schiene nach dem Schleifen von ihrer Verspannung gelöst, so entspannt sie sich wieder und nimmt eine ungerade Kontur an. Solche ungeraden Führungsschienen führen bei deren Anwendungen zu Problemen. Bei leichten Abweichungen von einer idealen Kontur ergeben sich Fehler im linearen Ablaufverhalten. Bei größeren Abweichungen von der ideal geraden Kontur kann es außerdem zu Montageproblemen kommen.

Bisher wurden aus einem Sortiment von Schienen solche mit akzeptablen Geradheitswerten ausgesucht und der Rest wurde verschrottet, so dass sich ein beträchtlicher Materialverlust ergab. Beim Durchhärten von Führungsschienen bauen sich im Vergleich zum Randschichthärten geringere Eigenspannungsdifferenzen auf, diese Vorgehensweise mit dem Durchhärten ist aber teuerer.

### Zusammenfassung der Erfindung

Der Erfindung liegt die Aufgabe zu Grunde, ein Verfahren und eine Vorrichtung anzugeben, die es ermöglichen, die Herstellung von geraden Führungsschienen zu verbessern und zu vereinfachen.

Diese Aufgabe wird erfindungsgemäß dadurch gelöst, dass die Führungsschiene in den Bereichen ihrer Erhebungen einer elektrochemischen Materialabtragung unterworfen wird. Eine erfindungsgemäße Vorrichtung kann ein geteiltes Werkzeug enthalten, dessen Unterteil eine Auflagefläche für die als Anode in einen Stromkreis geschaltete Führungsschiene aufweist und dessen als Kathode in dem Stromkreis wirkendes Oberteil zu der Anlagefläche hin absenkbar angeordnet ist. Es ist auch eine Vorrichtung möglich, die ein als Kathode in einen Stromkreis geschaltetes Werkzeug mit einem Hohlraumprofil enthält, in welchem ein trichterförmiger Bearbeitungsbereich und ein dahinter befindlicher Führungsbereich für die als Anode in dem Stromkreis wirkende Führungsschiene angeordnet sind.

Bei Anwendung der erfindungsgemäßen Fertigungsmethode wirken bei der Materialabtragung vernachlässigbar geringe Kräfte auf die Führungsschiene ein, da die Schiene im nicht eingespannten Zustand bearbeitet wird. Das ist ein wesentliches Element der Erfindung.

### Kurze Beschreibung der Erfindung

Ausführungsbeispiele der Erfindung sind in der Zeichnung dargestellt und werden im Folgenden näher beschrieben. Es zeigen
- Figur 1: eine in ein erstes Werkzeug eingelegte Führungsschiene in einer Seitenansicht;
- Figur 2: einen Querschnitt gemäß Linie II-II der Figur 1;
- Figur 3: eine in ein zweites Werkzeug eingelegte Führungsschiene in einer Seitenansicht der Schiene, wobei das Werkzeug im Längsschnitt dargestellt ist;
- Figur 4: eine stirnseitige Ansicht des Werkzeugs und der Führungsschiene nach Figur 3.

### Ausführliche Beschreibung der Zeichnung

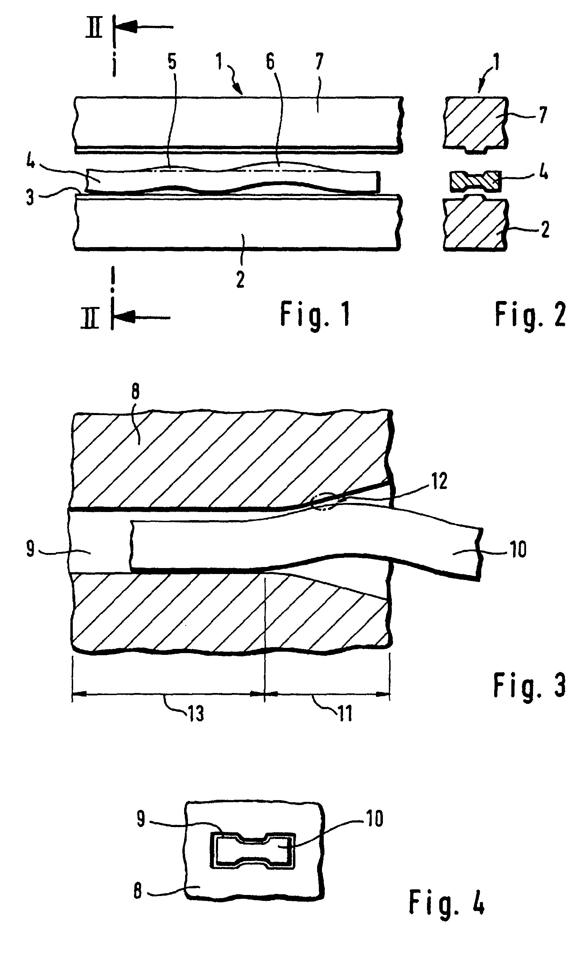

Ein in den Figuren 1 und 2 dargestelltes Werkzeug 1 enthält ein Unterteil 2, auf dessen obere Auflagefläche 3 eine Führungsschiene 4 gelegt ist. Diese ist nicht exakt gerade, sondern weist an ihrer Oberfläche mehrere Erhebungen, beispielsweise die Erhebungen 5 und 6 auf. Oberhalb dieser Erhebungen befindet sich ein Oberteil 7 des Werkzeugs 1, welches zu dem Unterteil 3 und damit zu den Erhebungen 5 und 6 der Führungsschiene 4 hin abgesenkt werden kann. Durch eine elektrochemische Materialabtragung kann nun der Werkstoff der Führungsschiene 4, der die Erhebungen 5 und 6 bildet, entfernt werden. Durch Abtragung aller Erhebungen lässt sich die Ungeradheit der Führungsschiene 4 beseitigen.

Hierbei wird die Führungsschiene 4 lediglich durch ihr Eigengewicht nach unten gedrückt. Vorhandene Ungeradheiten führen zu den lokalen Erhebungen. Von oben taucht das zur Auflagefläche 3 parallele Oberteil 7 auf die Führungsschiene 4 hinab. Durch den kraftfreien Materialabtragungsprozess werden z. B. die Erhebungen 5 und 6 abgetragen. Das insgesamt abzutragende Materialvolumen kann dabei in mehreren Einzelschritten abgetragen werden, wobei nacheinander jeweils eine andere Seite abgetragen wird. Dafür stehen Werkzeuge mit unterschiedlichen Oberflächenformen zur Verfügung, und zwar solche, die dem negativen Abbild der Schienenkontur der jeweiligen Seite entsprechen.

Die Figuren 3 und 4 zeigen ein weiteres Werkzeug 8, welches ein durchgehendes Holraumprofil 9 aufweist. In diesem ist eine Führungsschiene 10 angeordnet. Sie wird in einem trichterförmigen Bereich 11 des Holraumprofils 9 bearbeitet, wobei ein Materialabtrag 12 an der Führungsschiene 10 erfolgt. Hinter dem trichterförmigen Bereich 11 befindet sich in dem Holraumprofil 9 ein Führungsbereich 13 für die Führungsschiene 10.

Das Werkzeug 8 umspannt die Führungsschiene 10. Sein Hohlraumprofil 9 entspricht dem Schienenprofil. Das Werkzeug 8 wird nun in Längsrichtung über die Schiene geführt. Die räumliche Ausrichtung erfährt es durch den Führungsbereich 13 auf der Schiene 10. Sobald eine Ungeradheit der Schiene auftaucht, wird in dem trichterförmigen Bereich des Werkzeugs 8 Material von der Führungsschiene 10 abgetragen.

Üblicherweise herrscht in der gehärteten Schiene ein komplizierter Spannungszustand. Die Eigenspannungen sind besonders beim Randschichthärten örtlich unterschiedlich hoch. Beim vorbekannten Abtragen der äußeren Randschicht z. B. durch Schleifen, würden Volumina mit bestimmten Eigenspannungen abgetragen, die sich vom Restvolumen unterscheiden. Damit würde sich das Gesamtspannungsgleichgewicht über den Querschnitt verändern und die Schiene nähme im nicht eingespannten Zustand eine andere Kontur an. Diese Konturveränderung würde sich erst nach der Entspannung auswirken.

Im Gegensatz dazu kann sich bei der erfindungsgemäßen Vorgehensweise eine solche Deformation beim kraftfreien Materialabtragen schon während des Vorganges selbst auswirken. Somit hat die Führungsschiene gegen Ende des Materialabtragungsprozesses schon eine Kontur, bei der Eigenspannungen nicht zu einer weiteren Verformung führen.

### Bezugszahlenliste

- 1: Werkzeug
- 2: Unterteil
- 3: Auflagefläche
- 4: Führungsschiene
- 5: Erhebung
- 6: Erhebung
- 7: Oberteil
- 8: Werkzeug
- 9: Hohlraumprofil
- 10: Führungsschiene
- 11: trichterförmiger Bereich
- 12: Materialabtrag
- 13: Führungsbereich

## Patentansprüche

1. Verfahren zur Herstellung einer geraden Führungsschiene (4, 10) für eine Linearführung, nach welchem lokale Erhebungen (5, 6) an der Schienenoberfläche durch Abtragen von Schienenwerkstoff entfernt und dadurch Ungeradheiten der Führungsschiene (4, 10) ausgemerzt werden, **dadurch gekennzeichnet, dass** die Führungsschiene (4, 10) in den Bereichen ihrer Erhebungen (5, 6) einer elektrochemischen Materialabtragung unterworfen wird.

2. Vorrichtung zur Durchführung des Verfahrens nach Anspruch 1, **gekennzeichnet durch** ein geteiltes Werkzeug (1), dessen Unterteil (2) eine Auflagefläche (3) für die als Anode in einen Stromkreis gestaltete Führungsschiene (4) aufweist und dessen als Kathode in dem Stromkreis wirkendes Oberteil (7) zu der Anlagefläche (3) hin absenkbar angeordnet ist.

3. Vorrichtung zur Durchführung des Verfahrens nach Anspruch 1, **gekennzeichnet durch** ein als Kathode in einen Stromkreis geschaltetes Werkzeug (8) mit einem Hohlraumprofil (9), in welchem ein trichterförmiger Bearbeitungsbereich (11) und ein dahinter befindlicher Führungsbereich (13) für die als Anode in dem Stromkreis wirkende Führungsschiene (10) angeordnet sind.
